Europäisches Patentamt

(19) European Patent Office

Office européen des brevets

(11) Publication number : **0 514 016 A2**

## (12) EUROPEAN PATENT APPLICATION

(21) Application number : **92303466.4**

(22) Date of filing : **16.04.92**

(51) Int. Cl.[5] : **H04N 5/262**

(30) Priority : **17.04.91 US 686620**

(43) Date of publication of application :
**19.11.92 Bulletin 92/47**

(84) Designated Contracting States :
**BE DE ES FR GB IT LU NL**

(71) Applicant : **MICROTIME INC.**
**1280 Blue Hills Avenue**
**Bloomfield, Connecticut 06002 (US)**

(72) Inventor : **Sarra, Gene**
**96 Alexander Road**
**New Britain, Connecticut (US)**

(74) Representative : **Read, Matthew Charles et al**
**Venner Shipley & Co. 368 City Road**
**London EC1V 2QA (GB)**

(54) **Patch boundary detector circuit for a video special effects system.**

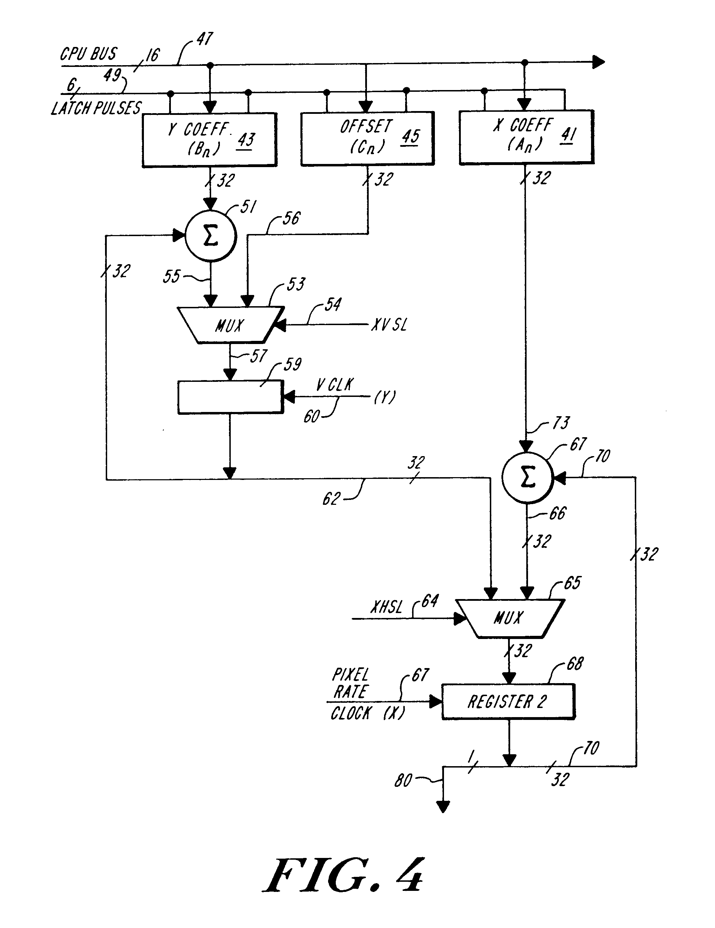

(57) A two-stage accumulating register circuit (51, 53, 59, 65, 67, 68) sequentially evaluates a boundary equation of the form AX+BY+C for each pixel (SCAN POINT) in a raster-scan video special effects display, where A, B and C are coefficients of the boundary (30, 31, 32, 33) and X and Y are the pixel and line values of each pixel in the display. Each register stage (51, 53, 59 and 65, 67, 68) is synchronized with the special effects system clocks (XVSL, V CLK, XHSL, PIXEL CLOCK RATE) to generate the completed output (80) at the required pixel rate. One register stage (65, 67, 68) generates the term AX and the other register stage (51, 53, 59) generates the term BY+C. A plurality of N register circuits (Fig. 4) are fabricated on one integrated circuit in order to form a detector circuit which can detect whether a pixel (SCAN POINT) lies within an N-sided patch (20) on the display.

EP 0 514 016 A2

Field of the Invention

This invention relates to a digital special effects system which is capable of transforming a television picture in real-time by breaking the picture into flat patches and transforming each patch and, more particularly, to a boundary detector circuit, which detects the position of each patch in the transformed picture.

Background of the Invention

Video special effects systems are important in the TV industry today and are typically capable of transforming a television image in a variety of ways including rotation, translation and perspective manipulation. A typical video special effects processor first digitizes an analog television signal to obtain a "source-image". The source-image is then stored in memory as a plurality of digital words (pixels) that represent the original TV image. The source-image pixels are then used to generate output (i.e, target-image) pixels for the final transformed picture. In general, a complex relationship exists between the source-image and target-image pixels which relationship is governed by the mathematical rules that transform the source-image into the target-image.

The mathematical computations which determine the aforementioned relationship can either be done continuously at the television field rate (in real-time) or performed ahead of time on stored picture information, with the more desirable special effects systems accomplishing the computations in real-time. In such real-time systems, if the entire source-image is directly transformed, a large number of computations must be rapidly performed (a typical source-image contains 239,000 pixels and must be transformed in 1/60th of a second); this computational burden cannot be sustained with any but the most powerful present-day processors. Accordingly, the computations in many real-time systems are performed with specialized hardware, but systems which transform each pixel of the source-image tend to be very expensive because of the extensive hardware needed to accomplish the computations at the required speed.

Accordingly, various prior art techniques have been designed to reduce the number of computations that must be performed in order to transform a picture in real-time at reduced cost. Such a video special effects system is described in U.S. Patent Application 07/501,021 entitled "3D Video Special Effects System and Method of Operation" filed by Uri Thier, Gene Sarra, William Woodbury and James Norman, on March 29, 1990 corresponding to EP 91302314.9 filed 18 March 1991 which application is hereby incorporated by reference. The system described in this application breaks the source image into a plurality of flat "patches" and computes the transformations,,of,oily the corners (vertices) of the patches which transformations are needed to form the patches into the target image. After the patch vertex positions in the target-image have been located, the target image is scanned line-by-line and a reverse transformation is used to locate the source-image pixels which are needed to generate each pixel in the target-image. In this manner only those source-image pixels which actually contribute to viewable target-image pixels are actually processed by the computation circuitry.

An important part of the aforementioned system is the circuitry for identifying the patch or patches in which each viewable target pixel lies. Relatively high-speed circuitry is required to perform patch identification because the correct patch must be located and the source-image pixels retrieved and transformed within a short period of time allocated for each pixel.

In addition, patch identification must be performed using only the patch vertex positions, since only these positions are transformed from the source-image to the target-image. Accordingly, patch identification is accomplished by identifying the boundaries of the patch and then determining if the target pixel lies within the boundaries. Boundary identification is, in turn, performed computing the results of equation sets, each equation of which describes a straight line boundary correcting a pair of adjacent vertices in a patch. The computed results for all equations corresponding to pairs of patch vertices for a particular patch are compared to the target pixel position to determine if the pixel lies within that patch.

As the number of patches increase or the number of vertices per patch increases, the number of equations which must be calculated within the allotted pixel time increases rapidly and thus the cost of the special effects system also increases rapidly. However, an increased number of patches enables various three-dimensional shapes to be modelled more closely.

Accordingly, it is an object of the present invention to provide a low cost, high-speed hardware circuit for a three-dimensional video special effects system, which circuit can operate, in real-time, to perform patch boundary identification.

It is another object of the present invention to provide a patch boundary detector circuit which can be programmed with patch vertex positions in order to compute the boundary position.

It is yet another object of the present invention to provide a patch boundary detector circuit which can be synchronized with the operation of other patch boundary detector circuits so that a patch can be identified.

It is a further object of the present invention to provide a patch boundary detector circuit which can be fabricated on an integrated circuit.

Summary of the Invention

The foregoing and other objects are achieved in an illustrative patch boundary detector circuit in which a two-stage accumulating register circuit sequentially calculates separate terms in the patch boundary equation. Each stage is synchronized with the system clocks to generate the completed output at the required pixel rate.

The invention will be better understood from the detailed description below, which should be read in conjunction with the accompanying drawing.

Brief Description of the Drawing

Fig. 1 is a schematic illustration of a source-image divided into a plurality of planar polygonal patches;

Fig. 2 is a schematic illustration of a four-step construction of a 3D rectangular tube using the patches set forth in Fig. 1;

Fig 3 is a diagram illustrating the method used to determine whether a target scan pixel lies within a particular patch by determining boundary equations;

Fig 4 is a block diagram of the inventive patch boundary detector circuit;

Fig. 5 is a timing diagram illustrating the operation of the patch boundary detector circuit of Fig. 4.

Detailed Description of the Preferred Embodiment

As previously mentioned, the video special effects processor of U.S. Patent Application Serial No. 07/501,021 operates by first constructing an outline of the target-image from planar polygonal "patches" using well-known algorithms for generating wire-frame models of three-dimensional shapes. A wire-frame model is constructed by transforming the patch vertices using rotation, translation and perspective operations on the vertex locations.

After the final manipulations have been applied to the vertices of each patch so that the patches form the desired three-dimensional target-image, the resulting transformation equations which move each patch vertex from its initial position in the planar source-image to its final position in the target-image are mathematically inverted to arrive at equations which can identify the source-image pixels that contribute to target-image pixels in that patch.

The target-image pixel values are then generated by examining the target-image locations pixel-by-pixel and line-by-line. At each target-image pixel location, the inventive patch boundary detector circuits are used to determine whether that target-image pixel location lies within one or more transformed patches. When the target-image pixel location lies within multiple patches, the patch closest to the "viewer" is selected. Once a target-image pixel location has been associated with a particular patch, the inverted transformation equations are used with the target-image pixel location to select the source-image pixels which contribute to that target-image pixel location. Finally the selected source-image pixels are filtered and processed to generate a value for the target-image pixel location.

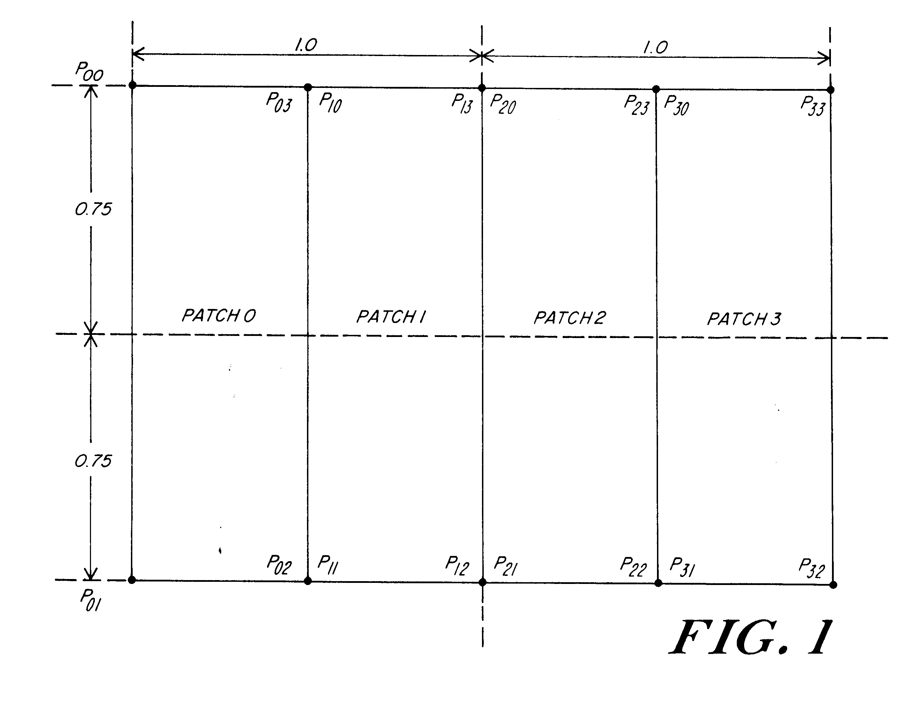

The actual steps in forming the wire-frame model, determining the patch identity and generating the target-image pixel value are discussed in more detail in correction with Figures 1-3.

The following steps detail the theory behind the construction of a 3D surface in Cartesian (X,Y,Z) coordinates from planar patches The planar patches are formed by dividing an initial two-dimensional planar source surface located in the XY plane (Z=0) between the limits $X=\pm1$ and $Y=\pm0.75$, as shown in Fig. 1. This source-image is representative of a conventional television raster scan image with a 4:3 aspect ratio.

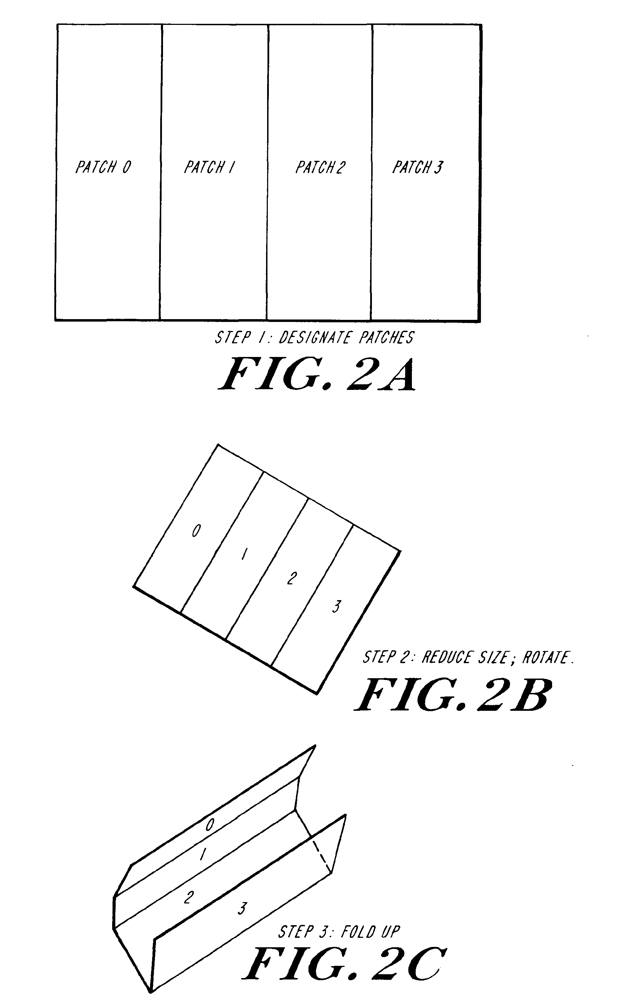

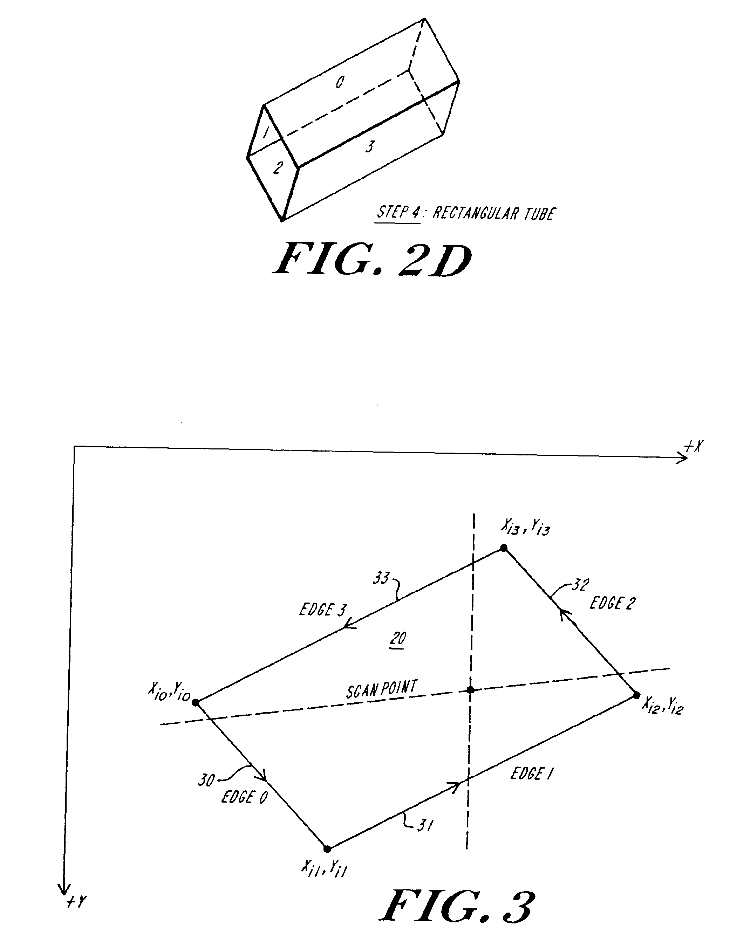

The source-image is divided into a plurality of N convex polygonal patches. "Convex" polygons are constructed so as to guarantee that all points on a line connecting any two points within the polygon also lie within the polygon The total number of patches is determined by the surface to be constructed. For curved surfaces, the representation will only be approximate and the accuracy will improve as the number of patches increases. However, as previously discussed, as the number of patches increases, the amount of circuitry required to process the patches increases, as well as the system cost. The actual number of patches used for a particular construction depends on the 3D surface. A maximum of 64 patches is are reasonable compromise in the trade-off between speedand surface smoothness. For the rectangular tube shown in Fig. 2, four patches are sufficient.

Each patch is given a number i, $0\leqq i \leqq N-1$ as set forth in Fig. 1. A patch is uniquely defined by its corner points or vertices. Theoretically, the number of vertices for each patch is arbitrary, but, as the number of vertices increases, so does the amount of circuitry necessary to process the vertices. Illustratively, each patch has been chosen to have four vertices. In their source location, the four vertices for each patch source (PS) vertex can be represented as four row vectors defined by the equations:

$$PS_j = [X_j \ Y_j \ 0 \ 1)]; \ 0 \leqq j \leqq 3 \quad (1)$$

Thus, the set of row vectors for i$^{th}$ patch source vertices is given by the equation:

$$PS_{ij} = [X_{ij} \ Y_{ij} \ 0 \ 1]; \ 0 \leqq i \leqq N - 1; \ 0 \leqq j \leqq 3 \quad (2)$$

All of the patches initially,begin in the XY plane. However, the final location of each patch in the constructed surface can be altered independently of the other patches, by translation, rotation and scaling about the X, Y and Z axes by the following well known transformation matrices.

| | | | | |
|---|---|---|---|---|
| Scaling of an amount SX, SY, SZ in the X, Y and Z axes   S = | Sx 0 0 0 | 0 Sy 0 0 | 0 0 Sz 0 | 0 0 0 1 |

| | | | | |
|---|---|---|---|---|
| Rotation about the Z axis   R(α) = | cosα −sinα 0 0 | sinα cosα 0 0 | 0 0 1 0 | 0 0 0 1 |

| | | | | |
|---|---|---|---|---|
| Rotation about the Y axis   R(ß) = | cosß 0 sinß 0 | 0 1 0 0 | −sinß 0 cosß 0 | 0 0 0 1 |

| | | | | |
|---|---|---|---|---|
| Rotation about the X axis   R(Y) = | 1 0 0 0 | 0 cosY −sinY 0 | 0 sinY conY 0 | 0 0 0 1 |

| | | | | |
|---|---|---|---|---|
| Translation by an amount Tx, Ty and Tz along X, Y and Z axes   T = | 1 0 0 Tx | 0 1 0 Ty | 0 0 1 Tz | 0 0 0 1 |

To construct a particular surface, the patch movement required to place each patch in its final position must first be derived and then the overall movement converted to the elements required by the matrices S, R($\alpha$, $\beta$, $\gamma$) and T (i.e., S, R, and T).

Once the matrix terms have been determined for that patch, the matrices can be multiplied together (eNgN $S_p \cdot R_p \cdot T_p$). This combined matrix is then used to transform each patch source vertex location $PS_{ij}$ into a target vertex location $PT_{ij}$ by the equation:

$$PT_{ij} = PS_{ij} \cdot S_p \cdot R_p \cdot T_p \quad (3)$$

where $PS_{ij}$ is the source location of the vertices of the i$^{th}$ patch and $PT_{ij}$ is the target vertex location of that patch.

The total evolution process from the initial planar source surface to the constructed 3D surface is divided into discrete steps which can be separately displayed on a video display screen. An example of the step-by-step construction of a 3D surface using this method is shown in Figs. 2A-2D in which a rotated rectangular tube is constructed As shown in Fig. 2A, the initial planar surface is divided into the four patches set forth in Fig. 1. The next two steps in the evolution are shown in Fig. 2B in which the initial plane is scaled and rotated. In step 2C the patches are further rotated to "fold up" the flat initial surface into the final tubular surface shown in Fig 2D.

For flexibility, the aforementioned special effects system allows the construction process to be halted after any step in the evolution. It also allows the speed of evolution to be varied. However, there is an upper limit to the speed of the process in that each step in the evolution must remain static for at least one television scan (i.e. 16 2/3 ms).

Once the 3D surface has been formed by the separate transformation of each patch, the entire surface can be moved as a unit in three-dimensional space by multiplying each patch transformation matrix $PS_{ij} \cdot S_p \cdot R_p \cdot T_p$ by an object transformation matrix $S_o \cdot R_o \cdot T_o$ whose elements are determined by the final object orientation in three-dimensional space. The resulting vertex final locations $PO_{ij}$ are thus computed as follows:

$$PO_{ij} = PS_{ij} \cdot S_p \cdot R_p \cdot T_p \, S_o \cdot R_o \cdot T_o \quad (4)$$

Equation (4) determines the vertex locations of the patches in a constructed "wire-frame" surface. Next, the Z-axis position or "depth" of each patch (relative to a viewer at point $Z_o$ on the Z axis) must be determined so that hidden surfaces can be removed from the transformed shape when real-time video information is mapped to the 3D surface. Finally, the transformed location of each patch vertex in the constructed surface just be projected onto a two-dimensional "viewport" area which forms the target-image for eventual output as a television signal.

The transformed patches are given depth and projected onto the video viewport by multiplying each transformed point $PO_{ij}$ by a perspective matrix P, where

$$P = \begin{array}{cccc} 1 & 0 & 0 & 0 \\ 0 & 1 & 0 & 0 \\ 0 & 0 & 0 & -1/Z_O \\ 0 & 0 & 0 & 1 \end{array}$$

and $Z_o$ is the distance from the point $PO_{ij}$ to the position of a hypothetical viewer located on the Z axis in the three-dimensional space. Thus, the final location of the patch vertex points on the viewport surface is given by the equation:

$$PV_{ij} = PO_{ij} \cdot P \quad (5)$$

The result of the above transformations is a set of four matrix equations for each patch, each equation of the set representing the transformations necessary to move one patch vertex from its source location to its target location on the planar viewport. The parameters of the viewport are chosen to give it a 4:3 aspect ratio so that it is representative of a conventional television display area. The coefficients corresponding to each matrix equation are dependent on the constructed shape and its transformation. Since the construction of the shape is carried out in steps in which each step remains static for one or more video fields, the coefficients can be determined prior to each video field and stored. In addition, the locations $PV_{ij}$ of the patch vertex points can be calculated and stored. The stored coefficients and locations will then govern the display for that entire video field.

Once the matrix coefficients and the transformed locations of the patch vertex points have been determined, real-time video is mapped to the constructed surface by using the transformed target vertex points to select the source-image pixels that make up the target-image pixels in that patch. Thus, only source-image pixels that are a part of the target-image are transformed. More particularly, before each video field begins the aforementioned matrix equations are inverted to determine inverted coefficients. This inversion is simplified by using "convex" patches which ensure that the inverse equations are linear. Consequently, the calculations which are necessary to invert the matrix are sufficiently simple that they can be carried out quickly with a reasonable amount of hardware within a television scan. The inverted equations can then be applied to each target-image pixel location to determine in which patch, if any, the pixel location is positioned.

More particularly, it is only necessary to scan the target-image viewport and determine in which patch, or patches each target pixel location lies. Once a target-image pixel location is identified with a target patch, the inverted coefficients can be used to select the source-image pixels which contribute to that pixel location.

At the start of each video field, digitized television image pixels are stored in a random access field memory to provide a set of source-image pixels. The target-image or viewport is then examined, pixel location-by-pixel location to determine whether a pixel location falls within the boundaries of one or more patches (and to determine the identity of these patches), or whether the pixel is located outside the boundaries of all the patches.

Patch identification requires the target pixel location be considered relative to the patch boundaries. A representation of a patch as transformed into the target-image is shown in Figure 3. Each patch boundary is considered to be a straight line edge connecting two vertices as shown in Figure 3. For example, if patch 20 of Figure 3 is the $i^{th}$ patch, then edge 30 is the straight line connecting vertex $PV_{io}$, at $X_{io}$, $Y_{io}$, to vertex $PV_{il}$, at point $X_{il}$, $Y_{il}$. Similarly, edge 31 is the straight line connecting vertex $PV_{il}$, at $X_{il}$, $Y_{il}$, to the vertex $PV_{iz}$, at $X_{i2}$, $Y_{i2}$. When the patch boundaries are selected in this way, equations for the patch boundaries can be written in the form:

$$A(PV_{ij})X + B(PV_{ij})Y + C(PV_{ij}) = 0 \quad (6)$$

where the coefficients A, B and C can be computed using the patch vertex locations $PV_{ij}$ determined in equation (5). Illustratively, in Figure 3, for edge 30, the A, B and C coefficients are given by $A = Y_{io} - Y_{i1}$, $B = X_{il} - X_{io}$ and $C = Y_{il}(x_{io} - x_{il}) - x_{il}(y_{io} - Y_{il})$. Similar expressions can be developed for edges 31, 32 and 33.

Each patch acquires an "orientation" (clockwise or counterclockwise) which depends on the direction in which the vertices are taken when computing the three coefficients the orientation is counter-clockwise in Figure

3. In order to prevent ambiguity when locating a pixel, the system always computes the coefficients with a counter-clockwise orientation.

In order to determine whether a given target-image location is within the boundaries of a particular patch, the X and Y coordinates of that location are inserted into the equations defining the boundaries of that patch. If the target-image pixel location lies directly on a patch boundary, equation (6) is satisfied, and the calculated result is zero. All other points result in either a positive or negative value. In accordance with a well-known mathematical theory for a given point, if all boundary equations for a patch yield a computed result with the same sign, the point is located within the patch boundaries. More particularly, inside points will be positive for a counter-clockwise orientation.

Thus, for each target-image pixel location of the 910 x 262 1/2 pixel viewport, the results of the boundary equations for patch i, determine if that the target-image pixel location is a part of that patch. Thus, the number of boundary equations per patch times N (i.e., where N is the number of patches) equations of form (6) must be computed for each target-image pixel location before a single patch containing the target-image pixel location can be identified. The A, B and C coefficients of the equations are computed with a counter-clockwise (i.e., CCW) orientation, so internal patch points yield a positive result. If zero is considered as a positive number, then all target-image pixel locations that yield positive results when evaluated in all boundary equations for a given patch, are part of that patch.

Accordingly, a plurality of patch boundary detector circuits of the type shown in Fig. 4 are provided for each patch used in the target display. Generally, a fixed number of boundaries (for example, four) is used for all patches and the boundary detector circuit evaluates expressions of the form shown in equation (6) using coefficients derived from the transformed patch vertices and the X and Y values for each target-image pixel location.

According to one aspect of the invention, the illustrative boundary detector circuit is comprised of two accumulating register circuits which calculate terms in the equation (6) under control of synchronizing pulses XVSL, VCLK, XHSL and the pixel rate clock. The first accumulating register circuit consists of adder 51, multiplexer 53 and register 59; the second accumulating register circuit consists of adder 67, multiplexer 65 and register 68. The synchronizing pulses are conveniently generated by the special effects system in connection with the storage and display of video information Specifically, the XVSL pulse occurs at the start of each video field, the VCLK pulse occurs at the end of each horizontal line and the XHSL pulse occurs at the start of each horizontal line.

More particularly, the operation of the circuit starts with an initialization of the circuit when the 32-bit numbers representing coefficients A, B and C, derived by transforming the source-image patch vertices (which, as previously mentioned, are computed at the start of each television field and stored), are retrieved from storage, loaded and latched into the 32-bit buffers 41, 43 and 45, respectively. Illustratively, loading is done sixteen bits at a time via the 16-bit CPU bus 47. A latch pulse appears on the appropriate wire of the six-wire latch pulse bus 49, in order to latch either the lower 16 bits or the upper 16 bits into either register 41, 43 or 45.

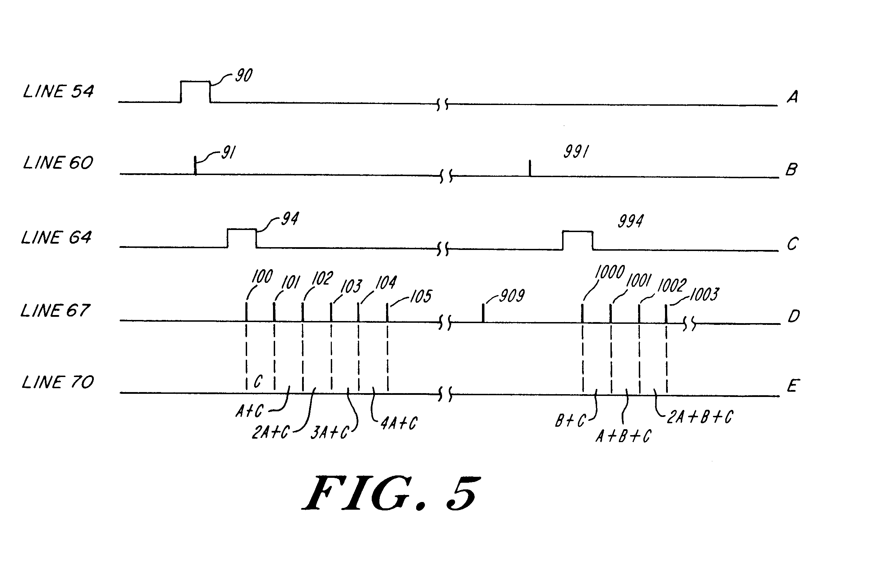

The C coefficient in register 45 is then transferred to register 59 by means of a synchronizing pulse XVSL on line 54 (shown as pulse 90 in line A of Figure 5) which causes multiplexer 53 to provide input 56 to register 59. A VCLK pulse on line 60 (pulse 91 on Figure 5, line B), which occurs while XVSL is still TRUE, latches coefficient C into 32-bit register 59.

Shortly thereafter, pulse XHSL on line 64 (corresponding to pulse 94, Figure 5, line C) causes multiplexer 65 to apply the 32-bit C coefficient in register 59 to register 68. A subsequent clock pulse on the pixel rate clock line 67 (pulse 100, Figure 5, line D) latches the C coefficient into register 68.

Register 68 is a 32-bit register with a 32-bit output plus a sign bit. The sign bit of register 68 is the output of the patch boundary detector circuit and appears on line 80 of Figure 4. Since the circuit effectively computes the boundary equation values in two's complement notation, the sign bit corresponds to the highest-order bit of the 32-bit register 68. Consequently, it will be a logical "ZERO" for all equation values which are positive or zero and a logical "ONE" for all equation values which are negative. At this point, the sign bit output on line 80 is the sign of coefficient C, since C is the value presently in register 68. In relation to the equation (6), the output on line 80 corresponds to the equation (6) value the target-image pixel location X=0, Y=0 after the first pixel rate clock pulse and circuit intialization is complete at this point.

Thus, the sign bit at the output 80 of register 68 corresponds to the result of equation (6) for the target-image pixel location X=0, Y=0. In order to detect whether the target-image pixel location is within a patch, boundary detector circuits similar to that shown in Figure 4 are provided for each side of the patch and loaded with the appropriate coefficients for that patch side. For each patch, the boundary detector circuits function simultaneously to generate a sign output for each patch boundary. The sign outputs can then be compared as discussed above to determine whether the particular target-image pixel location under consideration lies within the patch boundaries Circuitry for comparing the boundary detector outputs and making a decision as to whether the pixel location is within the patch is shown in detail in the aforementioned U.S. Patent application serial no. 07/501,021. As this latter circuitry forms no part of the present invention, it will not be discussed further herein.

After initialization, the illustrative boundary circuit begins boundary computations for further target-image pixel locations. In order to do this, the accumulating register comprised of adder 67, multiplexer 65 and register 68 circulates at the pixel rate under control of pixel rate clock pulses on line 67 to generate outputs for successive target-image pixel locations. In particular, the coefficient C value which is latched in register 68, is recirculated from the output of register 68, via bus 70, to one input of digital adder 67. Adder 67 receives the value of A coefficient (previously latched into register 41) at its other input via bus 73. Thus, the output 66 from adder 67 becomes the value A+C.

At this point, the XHSL signal on line 64 returns to its FALSE value as shown on line C of Figure 5 and remains FALSE for the duration of the horizontal target-image line. The FALSE XHSL value causes multiplexer 65 to apply the A+C value at adder output 66 to the inputs of register 68. Therefore, when the next pixel rate clock pulse appears on line 67 (pulse 101, line D, in Fig. 5), the value A+C is latched into register 68 which value corresponds to the result of equation (6) for the target-image pixel location X=1, Y=0. Consequently, the output line 80 will be the sign bit of the point x=1, y=0.

The value A+C at the output of register 68 is then recirculated, via bus 70, to adder 67 where it is added to the coefficient value A from register 41. Therefore, when the next pixel clock pulse (pulse 102, line D, Figure 5) latches the output of adder 67 into register 68 via multiplexer 65, register 68 will contain the value 2A+C and the sign bit for the target-image pixel location X=2, Y=0 appears on output line 80.

In a similar manner, for each horizontal line, the pixel rate clock produces 910 pulses causing the boundary detector circuit to sequentially evaluate equation (6) for each of the 910 target-image pixel Y=0, $0 \leqq X \leqq 909$ which make up the first line of the target-image.

The vertical or "Y" component of equation (6) is generated by the accumulating register comprised of adder 51, multiplexer 53 and register 59. As previously discussed, register 59 now holds the value of the C coefficient which was latched into the register during initialization. This value is applied to one input of adder 51. The other input of adder 51 is provided with the value of the B coefficient from register 43. Also as mentioned above, the VCLK line is pulsed at the beginning of each horizontal line of the target-image. Accordingly, at the beginning of the next line, a pulse appears on the VCLK line 60 (pulse 991, line B, Figure 5). At this time the XVSL line has a FALSE value thereon since the XVSL pulse only occurs at the start of each television field. Consequently, multiplexer 53 is controlled to connect the output 56 of adder 51 to the input of register 59. The value B+C is thus latched into register 59.

Shortly after the occurrence of the VCLK pulse (at the start of the horizontal line), an XHSL pulse appears on line 64 (pulse 994, line C, Figure 5) which pulse causes multiplexer 65 to connect input 62 to its output. Accordingly, the output of register 59 (B+C) is applied to the inputs of register 68. The next occurrence of a pixel rate clock pulse on line 67 (pulse 1000, line D, Figure 5) latches the value B+C into register 68. Consequently, at this point in time, output line 80 generates the result of equation (6) for the target-image pixel location X=0, Y=1. Operation then continues in response to the pixel rate clock in the manner discussed above for the accumulating register comprised of adder 67, multiplexer 65 and register 68 to generate 909 more equation values for each of the 909 target-image pixel locations Y=1, $1 \leqq X \leqq 909$.

The above-described operation continues for 263 repetitions corresponding to the 262 1/2 lines in the target-image field. Thus, the sign-bit output 80 of register 68 generates the value of equation (6) for each of the 262 1/2x910 locations in the target-image.

As previously mentioned, once a target-image pixel location has been associated with a patch, other previously-stored coefficients are used to determine both the addresses of the source pixels and the manner in which the source pixels must be manipulated to generate the target pixel value. As the process of patch selection, retrieval of the source pixels and computation of the output pixel value must all be performed within a 70 nanosecond interval allocated to each pixel for real-time operation, boundary detection speed is critical. In accordance with another aspect of the invention a plurality of identical circuits of the type shown in Figure 4 (for example, four identical circuits) can be designed as parts of an integrated circuit, and may be formed by large-scale integration to fabricate a detector circuit for a single patch with multiple sides (for example, four sides). Consequently, high-speed operation can be more easily obtained which greatly assists in meeting the stringent time limitations.

Although only one illustrative embodiment of the invention has been shown, other changes and modifications will immediately become obvious to those skilled in the art. Such changes and modifications are intended to be covered by the following claims.

EP 0 514 016 A2

**Claims**

1. A raster-scan digital special effects system for generating a digital image comprised of lines of pixels in response to repetitive line and pixel synchronizing signals (XVSL, VCLK, XHSL, PIXEL RATE CLOCK), the special effects system having a boundary detection circuit (Fig. 4) for determining the side of a boundary line (30, 31, 32, 33) on which each of the pixels (SCAN POINT) lies by determining the value of an expression of the form AX+BY+C where A, B and C are predetermined coefficient values representing the boundary line and X and Y represent the pixel and line values of the pixel location in the digital image, CHARACTERIZED IN THAT the boundary detection circuit (Fig. 4) comprises a first accumulating register means (51, 53, 59) for accumulating a first running sum; first means (45) for initially loading the C coefficient value into the first accumulating register means (51, 53, 59) to set the first running sum to the C coefficient value; means (43) responsive to each occurrence of the line synchronizing signal (V CLK) for adding the B coefficient value to the first running sum; second accumulating register means (65, 67, 68) for accumulating a second running sum representing the expression value; means (62) for loading the first running sum into the second accumulating register means to set the second running sum to the first running sum value; and means (41) responsive to each occurrence of the pixel synchronizing signal (PIXEL RATE CLOCK) for adding the A coefficient value to the second running sum.

2. A raster-scan digital special effects system according to Claim 1 CHARACTERIZED IN THAT the first accumulating register means (51, 53, 59) comprises a first digital adder (51) having an input and an output (58) connected to a first register (59), first means (53) responsive to each occurrence of the line synchronizing signal (XVSL) for loading a value at the first digital adder output (58) into the first register (59) and means (62) for providing the contents of the first register (59) to the first digital adder input.

3. A raster-scan digital special effects system according to Claims 1 or 2 CHARACTERIZED IN THAT the second accumulating register means (65, 67, 68) comprises a second digital adder (67) having an input (70) and an output (66) connected to a second register (68), second means (65) responsive to each occurrence of the pixel synchronizing signal (XHSL) for loading a value at the second digital adder output (66) into the second register (68) and means (70) for providing the contents of the second register (68) to the second digital adder input.

4. A raster-scan digital special effects system according to any of the preceding claims CHARACTERIZED IN THAT the first loading means (53) comprises a first multiplexer (53) connected between the first digital adder (51) and the first register (59).

5. A raster-scan digital special effects system according to any of the preceding claims CHARACTERIZED IN THAT the second loading means (65) comprises a second multiplexer (65) connected between the second digital adder (67) and the second register (68).

6. A raster-scan digital special effects system according to any of the preceding claims CHARACTERIZED IN THAT the means (43) for adding the B coefficient value to the first running sum comprises a first latch (43) for temporarily storing the A coefficient value and means (47, 49) for storing the A coefficient value in the first latch prior to the generation of the digital image.

7. A raster-scan digital special effects system according to any of the preceding claims CHARACTERIZED IN THAT the means for initially loading the C coefficient value into the first accumulating register means (51, 53, 59) comprises a second latch (45) for temporarily storing the C coefficient value and means (47, 49) for storing the C coefficient value in the second latch prior to the generation of the digital image.

8. A raster-scan digital special effects system according to any of the preceding claims CHARACTERIZED IN THAT the means for adding the A coefficient value to the second running sum comprises a third latch (41) for temporarily storing the A coefficient value and means (47, 49) for storing the A coefficient value in the third latch prior to the generation of the digital image.

9. A raster-scan digital special effects system according to any of the preceding claims CHARACTERIZED IN THAT the boundary detection circuit comprises a plurality of patch detector circuits (Fig. 4) each determining whether a pixel (SCAN POINT) lies within an associated patch (20) and each comprising comprising a first accumulating register means (51, 53, 59) for accumulating a first running sum; first means (45) for initially loading the C coefficient value into the first accumulating register means (51, 53, 59) to

8

set the first running sum to the C coefficient value; means (43) responsive to each occurrence of the line synchronizing signal (V CLK) for adding the B coefficient value to the first running sum; second accumulating register means (65, 67, 68) for accumulating a second running sum representing the expression value; means (62) for loading the first running sum into the second accumulating register means to set the second running sum to the first running sum value; and means (41) responsive to each occurrence of the pixel synchronizing signal (PIXEL RATE CLOCK) for adding the A coefficient value to the second running sum.

$P_{00}$

1.0

1.0

$P_{03}$ $P_{10}$ $P_{13}$ $P_{20}$ $P_{23}$ $P_{30}$ $P_{33}$

0.75

PATCH 0    PATCH 1    PATCH 2    PATCH 3

0.75

$P_{02}$ $P_{11}$ $P_{12}$ $P_{21}$ $P_{22}$ $P_{31}$ $P_{32}$

$P_{01}$

*FIG. 1*

STEP 1: DESIGNATE PATCHES

FIG. 2A

STEP 2: REDUCE SIZE; ROTATE.

FIG. 2B

STEP 3: FOLD UP

FIG. 2C

STEP 4 : RECTANGULAR TUBE

# FIG. 2D

# FIG. 3

*FIG. 4*

**FIG. 5**